# EUROPÄISCHE PATENTANMELDUNG

(11) **EP 2 789 763 A2**
(43) Veröffentlichungstag der Anmeldung: **15.10.2014**
(21) Anmeldenummer: 14001270.9
(22) Anmeldetag: 07.04.2014
(51) Int. Cl.: E04D 13/147

(54) **Streckbares Dichtband**

(30) Priorität: 10.04.2013 DE 102013006110
(71) Anmelder: Baumeister, Alexander, 63505 Langenselbold (DE)
(72) Erfinder: Röttger, Wilhelm, 36103 Flieden (DE); Röttger, Nils, 36103 Flieden (DE); Röttger, Lars, 36103 Flieden (DE)

(57) **Zusammenfassung**

Hauptanspruch: Streckbares Bahnmaterial (10) mit einer Deckschicht (12) aus einer plissierten Folie, deren Falten quer zur Streckrichtung verlaufen,
dadurch gekennzeichnet,
dass die Faltflächen (26,32) in Streckrichtung miteinander verfalzt sind und
dass die Teilflächen (16) der Deckschicht (12) eine fugenlose, glatte Dichtfläche bilden.

## Beschreibung

Die Erfindung betrifft ein streckbares Bahnmaterial mit einer plissierten Tragschicht für den Einsatz als dehnbares und vorzugsweise dampfdichtes Dichtband, wobei die Oberfläche praktisch glatt und geschlossen ist. Derartiges Bahnmaterial ist an beliebig strukturierte Flächen mit Unebenheiten, Krümmungen oder Wölbungen anformbar.

Es sind zahlreiche Anwendungen von plissierten oder gefalteten Folien bekannt, insbesondere bei Rollos oder Faltstores, wobei die Faltungen im allgemeinen die Funktion einer Dehnreserve haben.

In US 4,794,052 ist eine plissierte Aluminiumfolie als Rollenware beschrieben, die entfaltet und zu einer Backunterlage ausgeklappt werden kann.

DE 1.898.873 U beschreibt eine plissierte, an beliebige Oberflächen anformbare Schutzfolie aus Papier oder Pappe, bei der die Falten durch eine teilweise, schwache Verklebung aneinander haften, sodass die Folie leicht von Hand auseinandergezogen werden kann. Diese Folie ist jedoch nur als temporärer Schutz vorgesehen und nicht als Tragschicht für ein Dichtband.

CH 693 322 A5 beschreibt ein Verfahren zur Herstellung einer mehrlagigen Metallfolienstruktur zu Isolationszwecken, die flexibel, aber nicht dehnbar ist.

Ein weiteres Dichtband ist aus DE 10 2008 051 728 B4 bekannt. Hierbei werden die Wellentäler einer als Feinstwelle ausgebildeten Folie mit Deckschichten ausgefüllt, sodass ein Dichtband mit geschlossenen Oberflächen entsteht. Obwohl hierbei nur sehr kleine Wellenhöhen zum Einsatz kommen, wird insgesamt relativ viel Material benötigt, um die Wellentäler auf der Ober- und Unterseite auszufüllen.

DE 102 30 552 B4 beschreibt ein streckbares Bahnmaterial mit einer Tragschicht und einer Deckschicht, wobei die Tragschicht aus organischen Fasern und die Deckschicht aus einer metallischen Folie besteht und diese als Mikrofalten ausgebildet sind. Nach den Verarbeitungsrichtlinien für ein solches Bahnmaterial dürfen die einzelnen Bahnen nicht ohne weiteres miteinander verklebt werden, da Wasser in die Mikrofalten eindringen kann ( Kapillareffekt ). Insbesondere die Verwendung dieser Folie im Freien scheint problematisch, da die Oberfläche bis zu 30 Falten pro cm aufweisen kann, die nach oben offen sind und in denen sich neben Staub und Regenwasser auch Samen und Sporen zwangsläufig ansammeln müssen. Auch auf der Unterseite ist dieses Bahnmaterial ebenfalls stark zerklüftet, sodass für den Einsatz als Dichtband eine relativ dicke Klebeschicht aus Butylkautschuk erforderlich ist, um eine glatte Klebefläche zu erzielen.

Die Dicke eines solchen Dichtbandes ist dementsprechend um ein Vielfaches höher als die Materialstärke der Tragschicht. Die Herstellung eines solchen Dichtbandes mit unregelmäßig geformten Mikrofalten geschieht durch Kreppen ähnlich der Krepp-Papierherstellung. Dieses bekannte Verfahren beschränkt die möglichen Werkstoffe auf relativ dünne und leicht verformbare Folien. Die Dicke der vorzugsweise verwendeten Aluminiumfolie wird mit 7µm angegeben. Das ist weniger als die Stärke der üblichen Haushaltsfolie. Ein Dichtband mit einer derart dünnen Aluminium-Folie kann naturgemäß kein bleiähnliches Verhalten zeigen, wie es bei der Abdichtung eines Kamins gegenüber einem Dach mit konturierten Pfannen erforderlich ist. Wenn sich die unterseitige Klebeschicht vom Dach löst, wird sie die Folie zwangsläufig mit anheben.

Eine duktile, also im eigentlichen Sinne treibbare Folie, die bei Zugbeanspruchung nicht reisst sondern sich durch Querschnittsverringerung wie Blei oder Gold dehnt, stellt dieses Produkt nicht dar. Ausserdem ist eine höhere Streckung als bei dem bekannten Krepp-Papier mit einem sehr hohen maschinellen Aufwand verbunden.

Der vorliegenden Erfindung liegt demgegenüber die Aufgabe zugrunde, ein streckbares Bahnmaterial mit einer vorzugsweise metallischen Deckschicht so auszugestalten, dass eine glatte, porenfreie Oberfläche entsteht, die nur eine geringe Stärke besitzt und trotzdem eine hohe Dehnfähigkeit ermöglicht.

Diese Aufgabe wird dadurch gelöst, dass eine Folie, vorzugsweise eine Metallfolie, zunächst quer zur Laufrichtung gewellt und anschließend flachgewalzt wird. Das überschüssige Material wird dabei zu einem flachen Falz verformt. Z.B. kann eine 50 µm-Aluminiumfolie mit 1,5 mm hohen und 3 mm breiten Wellen mit einer Dehnreserve von 60 % anschließend so flach gewalzt werden, dass sich daraus 3 mm breite Falten ergeben, die sich auf 5 mm - entsprechend 60 % Dehnung - aufreißen lassen. Durch die teilweise dreifache Folienstärke, bei einer 50-µm-Folie also 150 µm, erhöht diese Verfalzung die Steifigkeit der Folien ganz erheblich, so dass im allgemeinen bereits sehr dünne Folien die gleiche Steifigkeit erreichen wie dickere Folien, die nur gewellt sind. Theoretisch kann die Dehnreserve nahezu 200% erreichen, wenn die Folie über die gesamte Breite der Fälte dreifach gelegt wäre. In der Praxis sind 150 % Dehnung realistisch, das bedeutet, dass eine 3 mm breite Falte um 4,5 mm auf 7,5 mm aufgerissen werden kann.

Um diese Dehnung zu ermöglichen, muss die Folie vor dem Flachwalzen jedoch entsprechend eng gefaltet werden. Erfindungsgemäß geschieht dies dadurch, dass die Folie in einem ersten, bekannten Arbeitsschritt zwischen zwei Zahnwalzen gewellt und dabei etwa auf ca. 2/3 der ursprünglichen Länge verkürzt wird, sodass eine mögliche Dehnung von 2/3 auf 3/3 also um 50 % möglich wäre. Anschließend wird diese Welle auf der Ober- und Unterseite durch Führungsschienen am Ausweichen nach oben oder unten gehindert und durch ein zweites, entsprechend langsamer laufendes Zähnepaar zusammengestaucht. So kann z. B. eine 50 µm-Aluminiumfolie alle 5 mm quer zur Laufrichtung zunächst zu Wellen mit 3 mm Wellenabstand und mit 1,5 mm Wellenhöhe gewellt und danach so gestaucht werden, dass sich der Wellenabstand auf 2 mm reduziert und sich die Wellenhöhe dabei auf 2 mm erhöht. Das anschließende Flachwalzen dieser 2 mm langen Wellen erzeugt dann Falten, die sich 2 mm in Laufrichtung erstrecken und dann wiederum um 150 % ( von 2 mm auf 5 mm) dehnen lassen. Eine ähnlich große Dehnung ist bisher bei Dichtbändern nicht annähernd möglich gewesen.

Erfindungsgemäß soll beim abschließenden Flachwalzen die obere Walze eine glatte Stahlwalze sein und die Oberfläche der unteren Walze aus einem weicheren Material wie Gummi oder PUR bestehen, sodass die Oberseite der gefalteten Folie völlig eben wird und der Falz auf der Unterseite liegt. Bei entsprechendem Walzendruck liegen die gefalteten Flächen so dicht aufeinander, dass kein Schmutz eindringen kann wie bei nach oben geöffneten Mikrofalten, sondern höchstens Feuchtigkeit durch Kapillarwirkung.

Damit diese Verformung bestehen bleibt und die Faltflächen ohne Abstand dicht aufeinander liegen bleiben, muss das Folienmaterial gut plastisch verformbar sein, es darf also keine Rückstellkräfte haben und nicht federn. Hierfür eignen sich insbesondere dünne, weich geglühte Aluminiumfolien von etwa 20 µm bis 200 µm, aber auch Blei-, Kupfer- oder andere Metallfolien oder ähnlich verformbare Folienkombinationen, beispielsweise eine mit einem dünnen metallischen Streckgitter verstärkte Kunststoff-Folie. Diese Folien können zur Erhöhung der Reißfestigkeit mit einer Tragschicht aus organischen Fasern verstärkt werden, z.B. mit einem Polyestervlies.

Eine solche erfindungsgemäße Folie, die zumindest auf einer Seite wie ein glattes Blech erscheint, kann vielfältig als Ersatz für ein dickeres tiefziehfähiges Blech eingesetzt werden, z.B. als wärmeisolierende Alu-Folie für die Abschirmung von Abgasrohren in Kraftfahrzeugen.

Als besonders vorteilhaft hat sich erwiesen, dass die einzelnen Falten der Folie bei Dehnung durch örtlichen Druck sukzessive aufreißen und sich dann vollständig dehnen, bevor die nächste Falte aufzureißen beginnt. Dadurch entsteht immer nur in einem relativ kleinen Übergangsbereich ein teilweise aufgerissener Plisseespalt. Die übrigen Falten sind entweder noch ganz geschlossen oder ganz aufgerissen.

Dichtbänder mit einer solchen Deckschicht als Oberfläche haben bei der Verarbeitung entscheidende Vorteile, da die Oberfläche völlig glatt und dicht ist wie ein durchgehendes Blech z.B. ein Bleiblech, so dass sich die einzelnen Bahnen aufeinander verkleben lassen, aber leicht extrem gedehnt werden können.

Ausserdem ist es möglich, Löcher oder Schlitze vorzugsweise zwischen den verstärkten Bereichen in die Deckschicht zu stanzen, wobei die verstärkten Bereiche als Aussteifung dienen können. Ebenso sind halbkugelförmige Ausstülpungen als Abstandshalter oder Schweisspunkte möglich.

Das erfindungsgemäße Bahnmaterial kann für den Einsatz als dehnbares Dichtband vorzugsweise mit einer unterseitigen Beschichtung aus plastisch oder thermoplastisch verformbarem Material wie Bitumen oder Butylkautschuk aber auch mit einem schaumförmigen Material versehen werden und so als Dichtband mit vielfältigen Einsatzmöglichkeiten Verwendung finden, z.B. im Dachbereich zur Abdichtung von Kamin- oder Wandanschlüssen an die dreidimensional strukturierte Dachfläche. Ebenfalls ist ein solches, hoch dehnbares Dichtband zur Abdichtung von Rohrdurchbrüchen geeignet. Wenn z.B. ein Rohr mit 50 mm Außendurchmesser, das eine Wand durchdringt, mit einem nur 30 mm breiten Kranz abgedichtet werden soll, bedeutet das eine Dehnung des äußeren Dichtbandrandes von 50 mm auf 110 mm Durchmesser entsprechend 120 % Dehnung.

Falls es gewünscht wird, den Kapillareffekt, d.h. das Eindringen von Feuchtigkeit zwischen die Faltflächen, zu unterbinden, kann die Oberseite der zu plissierenden Folie mit einer wasserabweisenden Beschichtung versehen werden. Außerdem kann die Oberfläche nach dem Plissieren mit einer weichen Dispersion, z.B. einer Wachs- oder Acryldispersion versiegelt werden, die in die Fugen eindringt und diese wasserdicht verschließt.

Eine vorteilhafte Weiterentwicklung dieser Erfindung besteht ferner darin, dass die Oberfläche einer Metallfolie vor dem Plissieren beispielsweise mit einer plastisch verformbaren Beschichtung versehen wird z.B. einer dauerelastischen Kautschukmasse. Nach dem Flachwalzen verbinden sich die zusammenliegenden Oberflächen und es entsteht eine völlig ebene spaltfreie Oberfläche, sodass keine Feuchtigkeit mehr eindringen kann. Anstelle der Kautschukmasse kann auch ein entsprechend weicher Schmelzkleber oder eine ähnliche geeignete Dichtmasse verwendet werden. Erstaunlicherweise hat sich gezeigt, dass sich bestimmte, plastisch verformbare Dichtmassen beim Dehnen so gleichmäßig auf der aufgerissenen Folienoberfläche verteilen, dass die Oberfläche auch danach glatt und rissfrei bleibt. Da solche Dichtmassen, z.B. aus Polyisobutylen (PIB) teilweise relativ weich sind, können sie in einem weiteren Arbeitsschritt nach dem Plissieren mit einer zusätzlichen, dehnfähigen Beschichtung zum Schutz gegen Witterungseinflüsse versehen werden. Dies kann beispielsweise ein dehnbarer Lack oder eine entsprechende Folie sein.

Darüber hinaus hat es sich gezeigt, dass es sogar möglich ist, auf der Oberseite einer bereits plissierten Folie eine weiche Abdeckschicht aufzutragen, die beim Aufreißen der Plissierung nicht einreißt, sondern geschlossen und glatt bleibt, wenn die Dehnung nicht übermäßig groß ist - d. h. unter 100 % bleibt. Dies kann vorzugsweise eine Acrylat- oder PIB-Schicht sein. Hierdurch ergibt sich die Möglichkeit, solche plissierten Folien als Halbzeug zu fertigen und sie nach Bedarf zu beschichten, entweder mit unterschiedlichen Farben oder für verschiedene Einsatzzwecke mit verschiedenen Klebeschichten.

Die nachfolgende Beschreibung zeigt weitere Einzelheiten und Merkmale der Erfindung:
- Fig. 1: das Bahnmaterial mit einer glatten, geschlossenen Oberfläche,
- Fig. 2: die Detailansicht einer Plissierung in einem Längsschnitt,
- Fig. 3: das Bahnmaterial mit einer örtlichen Dehnung, bei der nur einzelne Plisseefalten aufreißen,
- Fig. 4: ein entsprechendes Bahnmaterial mit einer Beschichtung, die die Oberfläche völlig glättet und die Spalte abdichtet, sowie mit einer unterseitigen Klebeschicht,
- Fig. 5: ein teilweise gedehntes Bahnmaterial, bei dem die Faltflächen versiegelt sind,
- Fig. 6: ein teilweise gedehntes Bahnmaterial, dessen Oberfläche nach dem Plissieren beschichtet wurde,
- Fig. 7: das Bahnmaterial mit Schlitzen und Abstandshaltern
- Fig. 8: das erfindungsgemäße Flachwalzen der zuvor gewellten Deckschicht

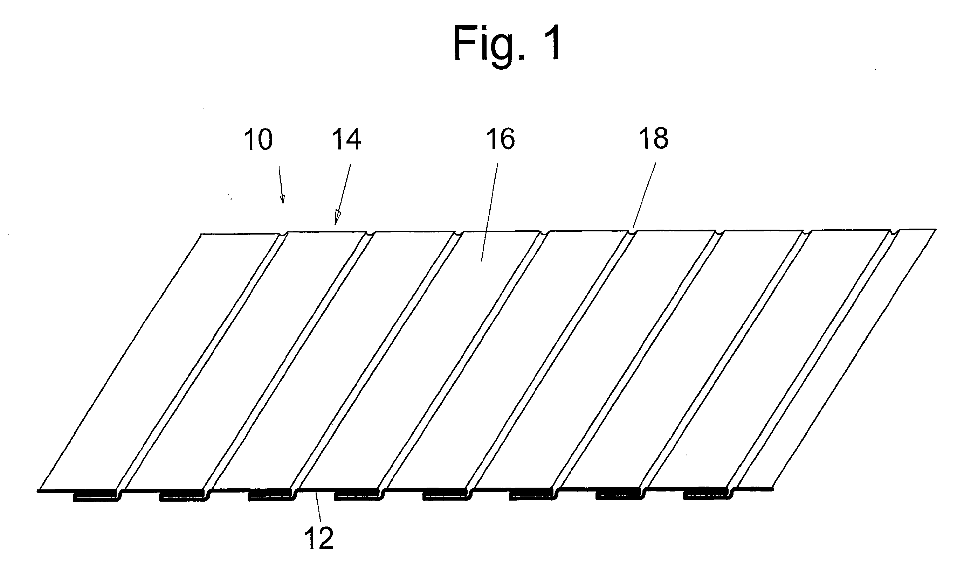

In Fig. 1 ist das erfindungsgemäße Bahnmaterial 10 mit einer plissierten Deckschicht 12 vergrößert dargestellt. Die Oberfläche 14 der Deckschicht 12 hat ebene Teilflächen 16, die jeweils mit einem geringen Spalt 18 aneinanderstoßen und insgesamt in einer Ebene liegen, so dass die Deckschicht 12 wie ein glattes, durchgehendes Band erscheint.

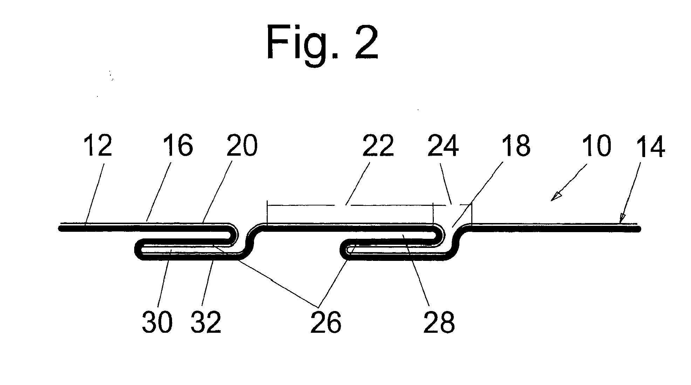

Fig. 2 zeigt vergrößert im Längsschnitt das Bahnmaterial 10 aus Fig. 1 mit der Deckschicht 12 und einer wasserabweisenden und/oder verstärkenden Beschichtung 20, die vor dem Plissieren aufgebracht wurde. Die Dicke der Deckschicht 12 liegt vorzugsweise zwischen 20 und 200 µm, während die Dicke der Oberflächenbeschichtung 20 vorzugsweise im Bereich von 5 bis 50 µm liegt.

Die Länge 22 der Teilflächen 16 beträgt zwischen 1 und 10 mm, vorzugsweise 3 mm, während die Spaltbreite 24 der Spalten 18 erfindungsgemäß möglichst klein sein sollte, abhängig von der Dicke der plissierten Folie 18 und der Oberflächenbeschichtung 20 ist und maximal 0,5 mm beträgt.

Die obere Plisseefalte 26 bildet einen möglichst geringen Spalt 28 unter der Teilfläche 16, ebenso gering ist der Spalt 30 zwischen den Plisseefalten 26 und 32.

Dies wird erreicht dadurch erreicht, dass beim Plissieren die Oberfläche 14 gegen eine glatte Stahlwalze gepresst wurde, wobei die Gegenwalze aus Gummi oder PUR besteht.

Die wasserabweisende Beschichtung 20, die auch zur Farbgebung dienen kann, verhindert somit das Eindringen von Feuchtigkeit in die Spalten 18 und 30. Die wasserabweisende Beschichtung kann auch zusätzlich als verstärkende und farbgebende Folie ausgebildet sein oder durch ein Vlies, Gewebe oder Gewirk verstärkt sein.

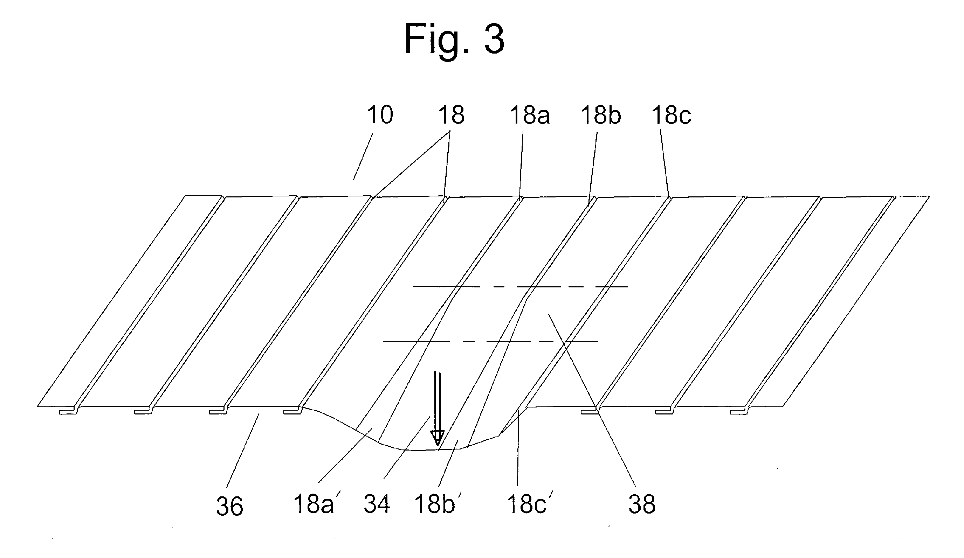

Fig. 3 zeigt das Bahnmaterial 10 in einem teilweise gedehnten Zustand. Durch eine örtliche Krafteinwirkung 34 auf den Randbereich 36 des Bahnmaterials 10 werden die benachbarten Spalten 18a, 18 b und 18c auf die Maße 18a', 18b'und 18c' vergrößert, während die übrigen Spalten 18 erst aufreißen, wenn die Streckung von 18a , 18 b und 18 c das Maximum erreicht hat. Nur in einem kleinen Übergangsbereich 38 liegen die Faltflächen nicht dicht aufeinander, so dass nur hier eine örtlich begrenzte Kapillarwirkung möglich ist.

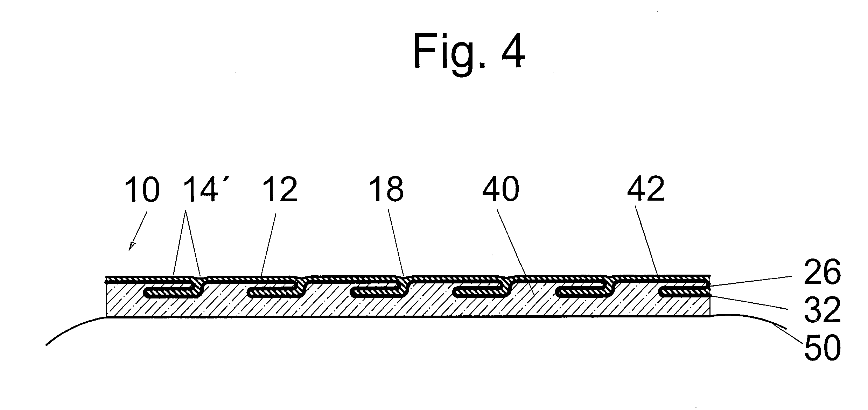

Fig. 4 stellt das Bahnmaterial 10 aus Fig. 1 mit einer unterseitigen Klebeschicht 40 und einer Beschichtung 42 auf der Deckschicht 12 dar. Die Beschichtung 42 wird vor dem Plissieren aufgetragen, so dass sie die Spalten 30 ausfüllt und eine glatte, ebene Oberfläche 14' bildet. Die Beschichtung 42 muss so plastisch verformbar sein, dass sie beim Aufrissen der Spalten 18 in etwa mittig aufgerissen wird und zu gleichen Teilen an den jeweiligen Oberflächen der Plisseefalten 26 und 32 haften bleibt. Hierfür eignen sich besonders Abdichtmassen auf Kautschukbasis.

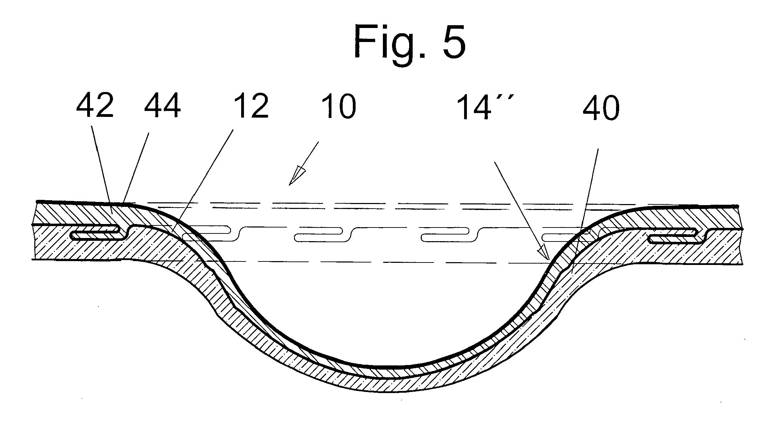

In Fig. 5 ist das Bahnmaterial 10 nach Fig. 4 in teilweise gedehntem Zustand dargestellt, wobei die die relativ weiche Beschichtung 42 mit einer dehnfähigen Folie oder Lackschicht 44 zum Schutz gegen Witterungseinflüsse abgedeckt ist. Hierbei gleicht die Beschichtung 42 mögliche Spannungsspitzen aus, so dass die Folie 44 nur die durchschnittliche Dehnung überbrücken muss, damit keine Kapillaren oder Risse entstehen und die Oberfläche 14" glatt und geschlossen bleibt.

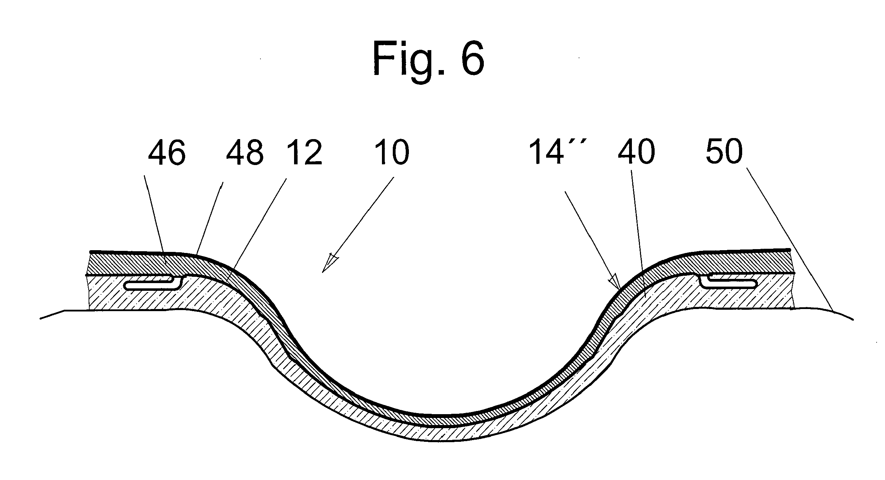

Fig. 6 zeigt das Bahnmaterial 10 ebenfalls in einem teilweise gedehnten Zustand, wobei die oberseitige Beschichtung 46 erst nach dem Plissieren aufgetragen und mit einer weiteren dehnbaren Lackschicht oder Folie 48 abgedeckt wurde. Die unterseitige Klebeschicht 40 ist mit einer Schutzfolie 50 abgedeckt.

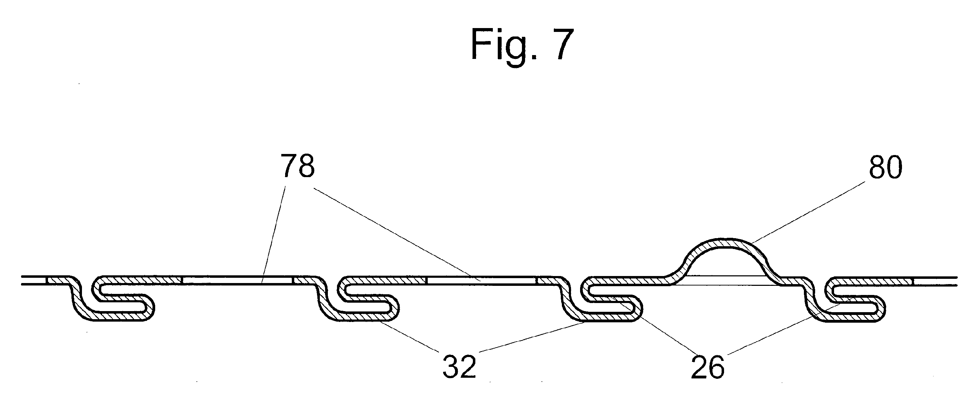

Fig. 7 zeigt das Bahnmaterial mit Schlitzen bzw. Löchern 78 oder auch Aufwölbungen 80, wobei die Plisseefalten 26,32 als Verstärkung dienen können.

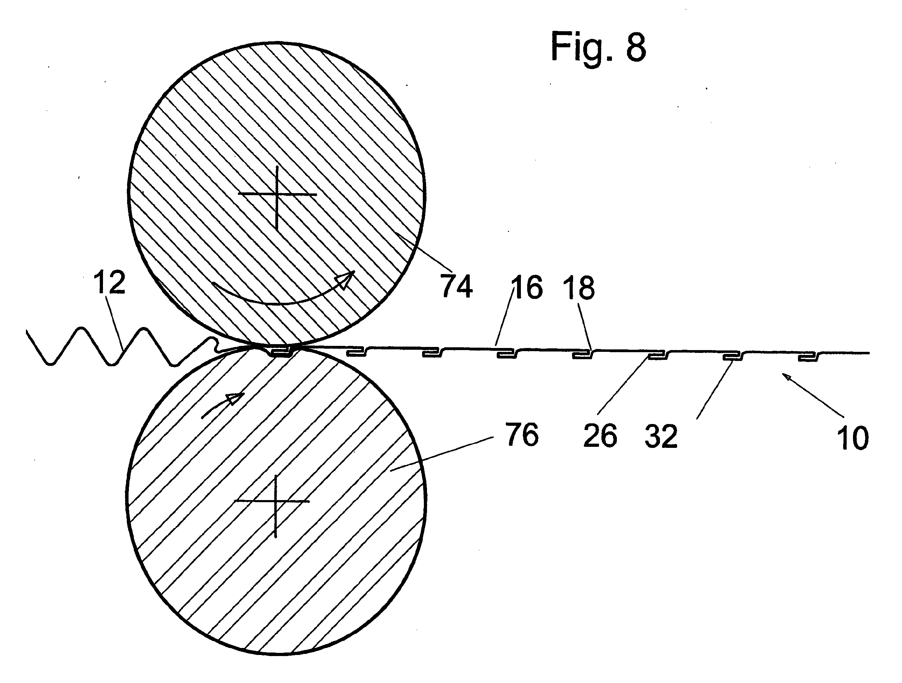

Fig. 8 zeigt das erfindungsgemäße Flachwalzen der Deckschicht 12.

Die zuvor gewellte Deckschicht 12 läuft zwischen zwei Walzen durch, wobei die obere Walze 74 aus glattem Stahl und die untere Walze 76 aus einem weicheren Material wie Gummi oder auch PUR besteht, sodass die Plisseefalten 26 und 32 und die Teilflächen 16 möglichst dicht aufeinander liegen und vor allem die Spalte 18 so klein wie möglich werden.

## Patentansprüche

1. Streckbares Bahnmaterial (10) mit einer Deckschicht (12) aus einer plissierten Folie, deren Falten quer zur Streckrichtung verlaufen,
**dadurch gekennzeichnet,**
**dass** die Faltflächen (26,32) in Streckrichtung miteinander verfalzt sind und
**dass** die Teilflächen (16) der Deckschicht (12) eine fugenlose, glatte Dichtfläche bilden.

2. Streckbares Bahnmaterial nach Anspruch 1,
**dadurch gekennzeichnet,**
**dass** die Oberfläche (14) der Deckschicht (12) mit einer wasserabweisenden und/oder plastisch verformbaren Beschichtung (20, 42) versehen ist.

3. Streckbares Bahnmaterial nach Anspruch 2,
**dadurch gekennzeichnet,**
**dass** die Oberfläche (14') der Beschichtung (42) mit einer dehnfähigen Folie (44) versehen ist.

4. Streckbares Bahnmaterial nach einem der vorhergehenden Ansprüche,
**dadurch gekennzeichnet,**
**dass** die Teilflächen (16) mit einer dehnfähigen Beschichtung (46) und/oder einer Folie (48) versehen sind.

5. Streckbares Bahnmaterial nach einem der vorhergehenden Ansprüche,
**dadurch gekennzeichnet,**
**dass** die Deckschicht (12) aus einer Metallfolie, vorzugsweise aus einer Aluminiumfolie, besteht und mit einem Vlies oder Gewebe verstärkt sein kann.

6. Streckbares Bahnmaterial nach einem der vorhergehenden Ansprüche,
**dadurch gekennzeichnet,**
**dass** die Deckschicht (12) mit organischen Fasern verstärkt ist.

7. Streckbares Bahnmaterial nach einem der vorhergehenden Ansprüche,
**dadurch gekennzeichnet,**
**dass** die Deckschicht (12) auf der Unterseite zumindest streifenweise mit einer Klebeschicht (40) und einer Schutzfolie (50) versehen ist.

8. Streckbares Bahnmaterial nach einem der vorhergehenden Ansprüche,
**dadurch gekennzeichnet,**
**dass** Deckschicht (12) zumindest teilweise mit zueinander versetzten, streckgitterartigen Schlitzen versehen ist, die sich in Streckrichtung erstrecken und eine Querdehnung ermöglichen.

9. Streckbares Bahnmaterial nach einem der vorhergehenden Ansprüche,
**dadurch gekennzeichnet,**
**dass** die Deckschicht mit Schlitzen, Löchern (78) oder Aufwölbungen (80) auf den Teilflächen (16) versehen ist.
